# EUROPÄISCHE PATENTSCHRIFT

(11) **EP 3 367 135 B1**
(45) Veröffentlichungstag und Bekanntmachung des Hinweises auf die Patenterteilung: **07.08.2019**
(21) Anmeldenummer: 17158362.8
(22) Anmeldetag: 28.02.2017
(51) Int. Cl.: G01V 8/00, G01S 17/42, G01S 7/481, G01S 7/497, G01V 8/26

(54) **OPTISCHER SENSOR**
OPTICAL SENSOR
CAPTEUR OPTIQUE

(43) Veröffentlichungstag der Anmeldung: 29.08.2018
(73) Patentinhaber: Leuze electronic GmbH + Co. KG, 73277 Owen/Teck (DE)
(72) Erfinder: Wendel, Simon, Dr., 73230 Kirchheim/Teck (DE); Rupp, Jürgen, 73252 Lenningen (DE)
(74) Vertreter: Ruckh, Rainer Gerhard

(56) Entgegenhaltungen:
- DE-C2- 19 706 612
- JP-B2- 3 250 203
- US-A- 5 463 384
- US-A1- 2011 286 009

## Beschreibung

Die Erfindung betrifft einen optischen Sensor gemäß dem Oberbegriff des Anspruchs 1.

Derartige optische Sensoren bilden scannende Sensoren, insbesondere scannende Distanzsensoren, mittels derer ein flächiger Überwachungsbereich hinsichtlich eines Eindringens eines Objekts überwacht werden kann.

Die so ausgebildeten optischen Sensoren werden insbesondere im Bereich der Sicherheitstechnik eingesetzt, um Gefahrenbereiche an stationären Anlagen oder im Vorfeld von Fahrzeugen, insbesondere fahrerlosen Transportfahrzeugen, zu überwachen.

Um die Anforderungen im Bereich der Sicherheitstechnik zu erfüllen, muss der optische Sensor 1 einen entsprechend fehlersicheren Aufbau aufweisen.

Ein generelles Problem bei derartigen optischen Sensoren, nicht nur im Bereich der Sicherheitstechnik, besteht darin, dass dessen Funktionsfähigkeit durch externe Umgebungseinflüsse beeinträchtigt werden kann, so dass keine sichere Objektdetektion mehr möglich ist.

Dies gilt insbesondere für die Scheibe des Gehäuses des optischen Sensors, durch welche die Lichtstrahlen der Sende-/ Empfangseinheit geführt sind, um Objekte im Überwachungsbereich detektieren zu können. Durch Verschmutzungen, Feuchtigkeit oder auch mechanische Beeinträchtigungen wie Risse oder Kratzer in der Scheibe kann die Durchlässigkeit der Scheibe reduziert sein, was zur Folge hat, dass die Lichtstrahlen der Sende-/ Empfangseinheit nicht mehr ungehindert durch die Scheibe geführt werden.

Um derartige Beeinträchtigungen erfassen zu können, ist es bekannt, eine Testeinheit einzusetzen, mittels derer der Zustand der Scheibe erfasst werden kann. Wird dann mit der Testeinheit eine solche Beeinträchtigung registriert, kann eine Warn- oder Störmeldung generiert werden, worauf ein Benutzer entsprechende Wartungsmaßnahmen einleiten kann.

Ein derartiger optischer Sensor ist aus der DE 197 06 612 C2 bekannt.

Der dort beschriebene optische Sensor umfasst ein in einem Gehäuse integriertes, Sendelichtstrahlen emittierendes erstes Sendeelement, wobei die Sendelichtstrahlen über eine Ablenkeinheit innerhalb eines vorgegebenen Winkelbereichs periodisch abgelenkt sind, parallel zu einer Fläche durch ein Austrittsfenster aus dem Gehäuse geführt sind und den Überwachungsbereich überstreichen. Von einem Objekt remittiertes Licht wird über das Austrittsfenster und die Ablenkeinheit zu einem Empfangselement geführt. Zur Kontrolle der Verschmutzung des zu der Fläche schräg verlaufenden Austrittsfensters werden von einem zweiten Sendeelement Testsendelichtstrahlen emittiert, welche über mit der Ablenkeinheit rotierende Umlenkmittel derart abgelenkt werden, dass diese am Strahlausgang der Umlenkmittel an einem in Drehrichtung der Ablenkeinheit verlaufenden Rand des Austrittsfensters austreten und dieses in im wesentlichen senkrechter Richtung zu der Fläche wenigstens einmal durchsetzen. Die am Rand des Austrittsfensters austretenden Testsendelichtstrahlen werden über die mit der Ablenkeinheit mitrotierenden Umlenkmittel einem zweiten Empfangselement zugeführt, so dass die dort auftreffende Lichtmenge als Maß für die Verschmutzung des Austrittsfensters auswertbar ist.

Die US 2011/0286009 A1 betrifft einen optischen Sensor in Form eines rotierenden Messkopfes, in dem ein Sender und ein Empfänger zur Objekterfassung drehbar angeordnet sind. Weiterhin ist ein Sensorelement zur Verschmutzungskontrolle der Scheibe des Messkopfes vorgesehen. Lichtstrahlen des Sensorelements werden über die Scheibe und einen stationär angeordneten Reflektor geführt.

Die JP 3250203 B2 betrifft einen scannenden Distanzsensor. Eine Verschmutzungskontrolle eines Fensters erfolgt durch Auswertung von Licht, das an diesem Fenster zurückreflektiert wird.

Die US 5,463,384 A betrifft ein Kollisionsvermeidungssystem mit einer optischen Sensoreinheit, die mehrere Lichtstrahlen emittiert. Durch eine Plausibilitätskontrolle von empfangenden Lichtstrahlen wird eine Verschmutzungskontrolle eines Fensters durchgeführt.

Der Erfindung liegt die Aufgabe zugrunde, einen optischen Sensor mit hoher Funktionssicherheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich und umfasst ein Gehäuse und eine innerhalb des Gehäuses angeordnete Sende-/ Empfangseinheit, wobei von einem Sender der Sende-/ Empfangseinheit emittierte Lichtstrahlen periodisch innerhalb des Überwachungsbereichs geführt sind und dabei eine Scheibe durchsetzen. Von einem Objekt zurückreflektierte Lichtstrahlen sind durch die Scheibe zu einem Empfänger (10) der Sende-/ Empfangseinheit geführt. In einer Auswerteeinheit werden Empfangssignale des Empfängers (10) zur Generierung eines Objektfeststellungsignals ausgewertet. Zur Überprüfung der Durchlässigkeit der Scheibe ist eine Testeinheit vorgesehen. Die Testeinheit weist mehrere stationär im Gehäuse angeordnete Testsender auf, deren Testlichtstrahlen auf unterschiedliche Bereiche der Scheibe ausgerichtet sind. Die Testeinheit weist eine außerhalb des Gehäuses angeordnete Reflektoreinheit auf, auf welche die Testlichtstrahlen der Testsender ausgerichtet sind. Jedem Testsender ist in einer Detektionsposition ein Testdetektor als weiterer Bestandteil der Testeinheit so zugeordnet, dass die von diesem Testsender emittierten Testlichtstrahlen die Scheibe durchsetzen, auf die Reflektoreinheit treffen und von dort durch die Scheibe zum Testdetektor geführt sind. Mit dem Testdetektor oder einem weiteren Testdetektor wird eine Referenzmessung durchgeführt, wobei hierzu die von einem Testsender emittierten Testlichtstrahlen über eine Referenzstrecke zu diesem Testdetektor geführt sind. Der optische Sensor weist einen dem Testsender zugeordneten, um eine Drehachse rotierenden Körper auf, welcher Führungsmittel zur Vorgabe der Detektionsposition aufweist. Der rotierende Körper weist eine das Führungsmittel bildende Durchgangsbohrung auf, wobei in die Detektionsposition definierenden Drehstellungen des rotierenden Körpers die von einem Testsender emittierten Testlichtstrahlen die Durchgangsbohrung durchsetzen und über die Reflektoreinheit zum Testdetektor geführt sind.

Ein wesentlicher Vorteil der Erfindung besteht darin, dass mit der Testeinheit eine vollständige Überprüfung der Scheibe hinsichtlich Beeinträchtigungen wie Verschmutzungen und Beschädigungen erreicht wird.

Die vollständige Überprüfung der Scheibe wird dadurch erreicht, dass mehrere Testsender so angeordnet sind, dass die von ihnen emittierten Testlichtstrahlen unterschiedliche Bereiche der Scheibe durchsetzen, wobei vorteilhaft diese unterschiedlichen Bereiche die gesamte Scheibe abdecken. Die Testlichtstrahlen werden dabei auf eine außerhalb des Gehäuses angeordnete Reflektoreinheit geführt. Vorteilhaft ist die Reflektoreinheit ein in Umfangsrichtung des Gehäuses verlaufender sich über den Bereich der Scheibe erstreckender Reflektor. Da sowohl die Testlichtstrahlen als auch die Reflektoreinheit stationär angeordnet sind, wird ein robuster Aufbau der Testeinheit mit nur wenig bewegten Teilen erhalten. Durch die Zuordnung von wenigstens einem Testdetektor in vorgegebenen Detektionspositionen zu den einzelnen Testsendern können die bei der Scheibenüberwachung von der Reflektoreinheit zurückreflektierten Testlichtstrahlen erfasst werden, wobei die dadurch generierten Empfangssignale ein genaues Maß dafür geben, ob eine Beeinträchtigung der Scheibe vorliegt oder nicht.

Durch die so gestaltete Scheibenüberwachung wird die Funktionssicherheit des optischen Sensors erheblich erhöht.

Erfindungsgemäß wird die Funktionssicherheit des optischen Sensors dadurch noch weiter erhöht, dass Komponenten der Testeinheit, die zur Scheibenüberwachung eingesetzt werden, insbesondere die Testsender, selbst auf ihre Funktion hin überprüft werden.

Diese Funktionsüberprüfung erfolgt dadurch, dass, vorzugsweise in vorgegebenen Referenzpositionen, die von jeweils einem Testsender emittierten Testlichtstrahlen über eine Referenzstrecke zu dem oder einem weiteren Testdetektor geführt werden. Wesentlich hierbei ist die definierte Strahlführung der Testlichtstrahlen über die Referenzstrecke, so dass im fehlerfreien Fall die Empfangssignale dieses Testdetektors einer bestimmten Erwartungshaltung entsprechen. Weichen die Empfangssignale von dieser Erwartungshaltung ab, liegt ein entsprechender Fehler der Testeinheit insbesondere des jeweiligen Testsenders vor.

Durch die erfindungsgemäßen Maßnahmen zur Funktionsüberprüfung des optischen Sensors wird eine wesentliche Anforderung für den Einsatz des optischen Sensors im Bereich der Sicherheitstechnik erfüllt. Wird mit der Testeinheit eine Beeinträchtigung der Scheibe oder eine Fehlfunktion der Testeinheit aufgedeckt, kann im optischen Sensor eine Warn- oder Störmeldung generiert werden, so dass eine Bedienperson entsprechende Wartungsmaßnahmen einleiten kann. Wird mit dem als Sicherheitssensor ausgebildeten optischen Sensor ein Gefahrenbereich an einer Anlage oder dergleichen überwacht, so wird vorteilhaft mit dem optischen Sensor ein Abschaltbefehl für die Anlage generiert, wenn im optischen Sensor ein Eindringen eines gefahrbringenden Objekts in den Gefahrenbereich registriert wird, oder wenn mit der Testeinheit eine Beeinträchtigung der Scheibe festgestellt wird, oder wenn im optischen Sensor eine Fehlfunktion festgestellt wird.

Erfindungsgemäß weist der optische Sensor einen dem Testsender zugeordneten, um eine Drehachse rotierenden Körper auf, welcher Führungsmittel zur Vorgabe der Detektionsposition aufweist.

Dabei weist der rotierende Körper eine das Führungsmittel bildende Durchgangsbohrung auf, wobei in den die Detektionspositionen definierenden Drehstellungen des rotierenden Körpers die von einem Testsender emittierten Testlichtstrahlen die Durchgangsbohrung durchsetzen und über die Reflektoreinheit zum Testdetektor geführt sind.

Durch diese Führungsmittel wird erreicht, dass die Testmessungen mit den einzelnen Testsendern zur Überprüfung der Scheibe zu vorgegebenen Zeiten einzeln nacheinander erfolgen. Damit werden gegenseitige Beeinflussungen der Testmessungen, die mit den einzelnen Testsendern durchgeführt werden, vermieden. Die Zeitabfolge der Testmessungen ist dabei im Wesentlichen durch die Drehzahl des rotierenden Körpers bestimmt.

Gemäß einer ersten Variante der Erfindung ist jedem Testsender ein stationär angeordneter Testdetektor benachbart zugeordnet.

Diese Variante zeichnet sich durch eine hohe Robustheit aus, da mit den Testsendern und den Testdetektoren alle elektronischen Komponenten der Testeinheit stationär im Gehäuse des optischen Sensors angeordnet sind.

Mit den einzelnen Paaren der stationär angeordneten Testsendern und Testdetektoren könnten prinzipiell gleichzeitig Testmessungen durchgeführt werden. Durch die Führungsmittel des den Testsendern und Testdetektoren zugeordneten rotierenden Körpers werden jedoch die Testmessungen einzeln nacheinander durchgeführt. Entsprechend sind in einer eine Detektionsposition definierenden Drehstellung des rotierenden Körpers ein Testsender und dessen zugeordneter Testdetektor der Durchgangsbohrung zugeordnet.

Weiterhin ist an eine Stirnseite des rotierenden Körpers eine Referenzfläche vorgesehen, wobei in diskreten Drehstellungen des rotierenden Körpers die von einem Testsender emittierten Testlichtstrahlen zur Durchführung einer Referenzmessung über die Referenzfläche zum Testdetektor geführt sind.

Die Referenzfläche erstreckt sich dabei über einen begrenzten Bereich des rotierenden Körpers und ist räumlich versetzt zu den Führungsmitteln angeordnet. Damit wird erreicht, dass die Referenzmessungen für die einzelnen Testsender zeitlich versetzt und auch zeitlich versetzt zu den Testmessungen erfolgen.

Gemäß einer zweiten Variante der Erfindung ist auf dem rotierenden Körper ein Testdetektor angeordnet. In den die Detektionsposition definierenden Drehstellungen des rotierenden Körpers sind die von einem Testsender emittierten Testlichtstrahlen über das Führungsmittel und die Reflektoreinheit zum Testdetektor geführt. Durch die Drehbewegung des rotierenden Körpers ist der Testdetektor nacheinander in Drehpositionen den einzelnen Testsendern zugeordnet.

Vorteilhaft bei dieser Variante ist, dass nur ein Testdetektor zur Durchführung der Testmessungen benötigt wird. Durch die Drehbewegung des rotierenden Körpers wird der Testdetektor nacheinander dicht an die einzelnen Testsender herausgeführt. Eine Testmessung mit einem Testsender erfolgt dann, wenn der Testdetektor unmittelbar benachbart zu diesem Testsender liegt.

Bei dieser Variante ist auf dem rotierenden Körper ein weiterer Testdetektor angeordnet, mittels dessen Referenzmessungen durchführbar sind.

Auch hier wird der weitere Testdetektor durch die Rotationsbewegung zeitlich nacheinander dicht an die einzelnen Testsender herangeführt, so dass dann mit dem jeweiligen Testsender eine Referenzmessung durchgeführt werden kann.

Vorteilhaft sind der Testdetektor und der weitere Testdetektor versetzt zueinander auf dem rotierenden Körper angeordnet.

Dabei ist in diskreten Referenzpositionen der weitere Testdetektor jeweils einem Testsender so zugeordnet, dass die von diesem Testsender emittierten Testlichtstrahlen über die Referenzstrecke zum weiteren Testdetektor geführt sind.

Dadurch wird eine zeitliche Trennung der Testmessungen und der Referenzmessungen erzielt.

Gemäß einer konstruktiv vorteilhaften Ausgestaltung ist die Referenzstrecke von einem Lichtleiter am rotierenden Körper, einer Bohrung in dem rotierenden Körper und einem Reflektorelement am rotierenden Körper gebildet.

Der erfindungsgemäße optische Sensor kann insbesondere als Distanzsensor ausgebildet sein. Durch die Erfassung der aktuellen Ablenkrichtung der Lichtstrahlen der Sende-/ Empfangseinheit und die Auswertung der mit der Sende-/ Empfangseinheit ermittelten Distanzwerte können mit dem optischen Sensor die Positionen von Objekten im Überwachungsbereich bestimmt werden. Die Distanzmessung kann insbesondere nach dem Phasenmessprinzip oder auch dem Impuls-Laufzeit-Verfahren erfolgen.

Gemäß einer ersten Ausgestaltung des optischen Sensors ist die Sende-/ Empfangseinheit um eine Drehachse rotierend angeordnet, das heißt in diesem Fall erfolgt die Ablenkung der Lichtstrahlen, indem die gesamte Sende-/ Empfangseinheit gedreht wird.

Gemäß einer weiteren Ausgestaltung des optischen Sensors ist die Sende-/ Empfangseinheit stationär im Gehäuse angeordnet. Die Lichtstrahlen sind über eine um eine Drehachse rotierende Ablenkeinheit geführt.

Die Erfindung wird im Folgenden anhand der Zeichnungen erläutert. Es zeigen:
- Figur 1:: Ausführungsbeispiel des erfindungsgemäßen optischen Sensors mit einer ersten Ausgestaltung einer Testeinheit für eine Scheibenüberwachung bei einer ersten Drehstellung eines rotierenden Körpers.
- Figur 2:: Teildarstellung des optischen Sensors gemäß Figur 1 mit Komponenten der Testeinheit.
- Figur 3:: Optischer Sensor gemäß Figur 1 mit dem rotierenden Körper in einer zweiten Drehstellung.
- Figur 4:: Variante der Ausführungsform des optischen Sensors gemäß Figur 1.
- Figur 5:: Optischer Sensor gemäß Figur 1 mit einer zweiten Ausgestaltung einer Testeinheit für eine Scheibenüberwachung bei einer zweiten Drehstellung des rotierenden Körpers.
- Figur 6:: Teildarstellung des optischen Sensors gemäß Figur 5 mit Komponenten der Testeinheit.
- Figur 7:: Optischer Sensor Figur 5 mit dem rotierenden Körper in einer zweiten Drehstellung.

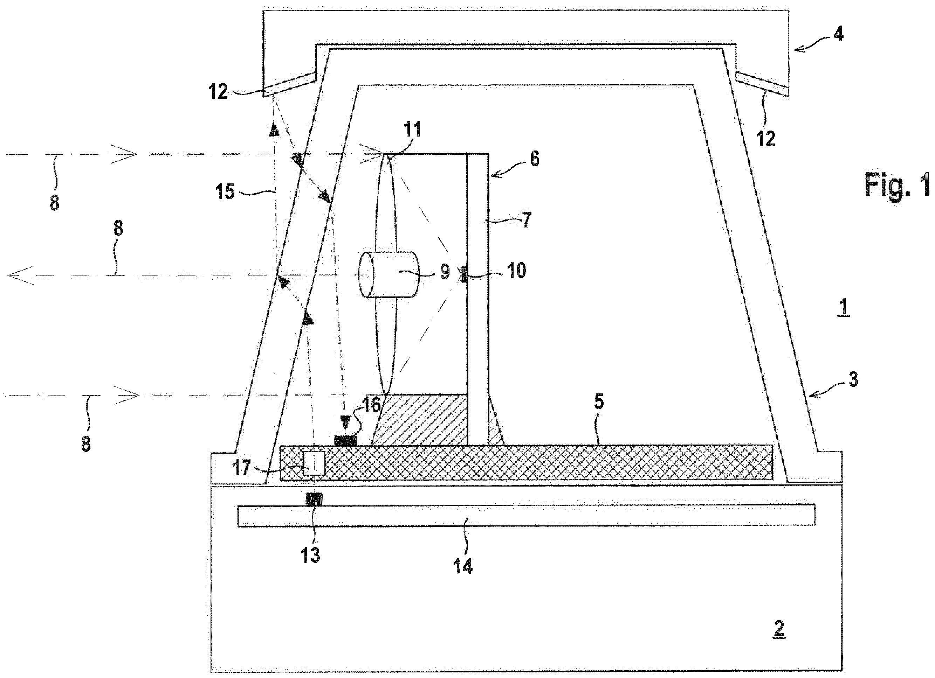

Figur 1 zeigt ein Ausführungsbeispiel eines optischen Sensors 1 zur Erfassung von Objekten in einem Überwachungsbereich. Der optische Sensor 1 weist einen stationären feststehenden Sockel 2 auf, auf welchem ein Gehäuse 3 befestigt ist, das heißt auch das Gehäuse 3 ist stationär angeordnet. Auf der Oberseite des Gehäuses 3 sitzt eine Kappe 4 fest auf, die somit auch stationär angeordnet ist. Das Gehäuse 3 weist einen kreisförmigen Querschnitt auf, der sich zu seiner Oberseite hin kontinuierlich verjüngt. Die Mantelfläche des Gehäuses 3 bildet eine lichtdurchlässige Scheibe.

Innerhalb des Gehäuses 3 befindet sich ein um eine Drehachse drehbarer rotierender Körper, der im vorliegenden Fall von einem kreisscheibenförmigen Teller 5 gebildet ist. Der Teller 5 liegt in einer horizontalen Ebene. Der Teller 5 wird um eine senkrechte Drehachse gedreht, die mit der Symmetrieachse des Gehäuses 3 zusammenfällt.

Der Teller 5 wird mittels eines Elektromotors in eine Drehbewegung versetzt. Der nicht gesondert dargestellte Stator befindet sich im feststehenden Sockel 2. Der ebenfalls nicht dargestellte Rotor ist mit dem Teller 5 verbunden.

Auf dem Teller 5 mitrotierend befindet sich eine Sende-/ Empfangseinheit 6 zur Erfassung der Objekte im Überwachungsbereich. Die Sende-/ Empfangseinheit 6 ist an einer auf dem Teller 5 aufsitzenden Halterung 7 gelagert. Die Sende-/ Empfangseinheit 6 weist einen Lichtstrahlen 8 emittierenden Sender 9 in Form einer Laserdiode auf. Weiterhin weist die Sende-/ Empfangseinheit 6 einen Empfänger 10 auf, dem eine Empfangsoptik 11 vorgeordnet ist. Zur Durchführung der Objektdetektion werden die vom 9 emittierten Lichtstrahlen 8 durch die Scheibe in den Überwachungsbereich geführt. Die von einem Objekt zurückreflektierten Lichtstrahlen 8 werden durch die Scheibe geführt und gelangen über die Empfangsoptik 11 zum Empfänger 10, der von einer Photodiode gebildet sein kann. Durch die Drehbewegung der Sende-/ Empfangseinheit 6 werden die Lichtstrahlen 8 periodisch in einem flächigen Überwachungsbereich geführt, der sich über den vollen Winkelbereich von 360° oder Ausschnitten hiervon erstrecken kann.

Der optische Sensor 1 ist im vorliegenden Fall in Form eines nach dem Impuls-Laufzeit-Verfahren arbeitenden Distanzsensors ausgebildet. Hierzu emittiert der Sender 9 Lichtstrahlen 8 in Form von Folgen kurzer Lichtimpulse. Zur Distanzbestimmung wird die Laufzeit der Lichtimpulse zum Objekt und wieder zurück gemessen. Diese Auswertung erfolgt in einer nicht dargestellten Auswerteeinheit. Die Auswerteeinheit ist mit der Sende-/ Empfangseinheit 6 über eine berührungslos arbeitende Datenübertragungsstrecke verbunden. In der Auswerteeinheit wird auch die aktuelle Ablenkposition der Lichtstrahlen 8 erfasst. Daraus und aus den aktuellen Positionswerten können die Positionen von Objekten im Überwachungsbereich erfasst werden.

Der optische Sensor 1 kann als Sicherheitssensor ausgebildet sein. Hierzu weist die Auswerteeinheit einen redundanten Aufbau auf, vorzugsweise in Form zweier sich zyklisch gegenseitig überwachender Rechnereinheiten.

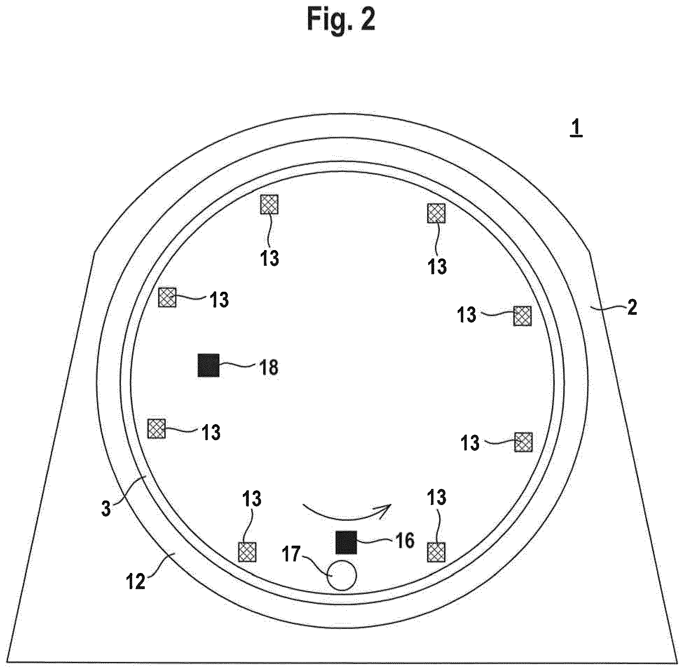

Zur Durchführung einer Scheibenüberwachung, das heißt zur Überprüfung, ob die Scheibe verschmutzt oder beschädigt und damit hinsichtlich ihrer Lichtdurchlässigkeit beeinträchtigt ist, ist eine Testeinheit vorgesehen, deren Komponenten in Figur 2 gesondert dargestellt sind.

Die Testeinheit umfasst mehrere identisch ausgebildete Testsender 13, die auf der Oberseite einer im Sockel 2 stationär angeordneten Platine 14 angeordnet sind. Im vorliegenden Fall sind acht Testsender 13 vorgesehen, die im Randbereich der Platine 14 angeordnet sind und jeweils in identischen Winkelschritten aufeinanderfolgend in Umfangsrichtung der Platine 14 angeordnet sind.

Die Testsender 13 sind so angeordnet, dass die von ihnen emittierten Testlichtstrahlen 15 die Scheibe an verschiedenen Bereichen durchsetzen und dann auf den Reflektor 12 geführt sind.

Die Testeinheit umfasst weiterhin einen Testdetektor 16, der auf der Oberseite des Tellers 5 aufsitzt und mit diesem mitrotiert. Der Testdetektor 16 liegt im Randbereich dicht neben einer Durchgangsbohrung 17 im Teller 5, die ein Führungsmittel für die Testlichtstrahlen 15 bildet.

Zur Scheibenüberwachung mit der so gebildeten Testeinheit werden Testmessungen durchgeführt, die in der Auswerteeinheit ausgewertet werden. Befindet sich die Durchgangsbohrung 17 im Bereich eines des Testsenders 13, so werden die von diesem Testsender 13 emittierten Testlichtstrahlen 15 durch die Durchgangsbohrung 17 geführt, durchsetzen die Scheibe und gelangen zum Reflektor 12. Vom Reflektor 12 werden die Testlichtstrahlen 15 zurückreflektiert, so dass sie nochmals die Scheibe durchsetzen und dann auf den Testdetektor 16 auftreffen (Figur 1).

Durch die Drehbewegung des Tellers 5 wird der Testdetektor 16 nacheinander in Durchgangspositionen, das heißt zu den einzelnen Testsendern 13 geführt, so dass mit diesen zeitlich versetzt einzelne Testmessungen erfolgen.

In der Auswerteeinheit erfolgt zweckmäßig eine Schwellwertbewertung der Empfangssignale des Testdetektors 16. Auf diese Weise wird festgestellt, ob einzelne Bereiche oder die gesamte Scheibe in ihrer Lichtdichtlässigkeit beeinträchtigt ist. Ist dies der Fall, wird in der Auswerteeinheit eine Stör- oder Warnmeldung generiert.

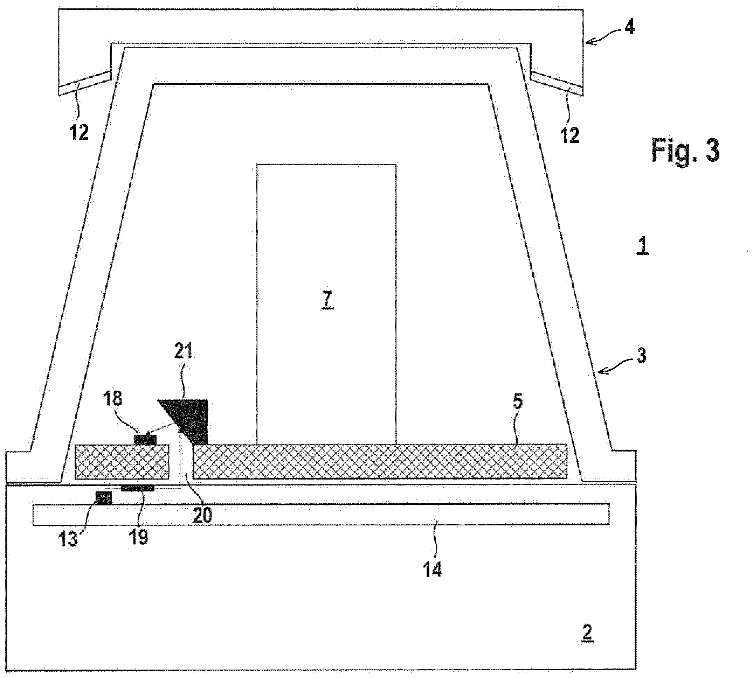

Zur Funktionsüberprüfung von Komponenten der Testeinheit, insbesondere zur Funktionsprüfung des Testsenders 13, ist auf der Oberseite des Tellers 5 ein weiterer Testdetektor 18 angeordnet. Der weitere Testdetektor 18 ist um etwa 90° versetzt zum ersten Testdetektor 16 auf dem Teller 5 angeordnet, wie Figur 2 zeigt. Dem weiteren Testdetektor 18 ist eine Referenzstrecke zugeordnet, die aus einem Lichtleiter 19 an der Unterseite des Tellers 5, einer an den Lichtleiter 19 anschließenden Bohrung 20 im Teller 5 und einem an der Oberseite des Tellers 5 angeordneten, an die Bohrung 20 anschließenden Reflektorelement 21 besteht (Figur 3).

Sobald sich der weitere Testdetektor 18 mit den Elementen der Referenzstrecke im Bereich eines Testsenders 13 befindet, werden die von diesem Testsender 13 emittierten Testlichtstrahlen 15 über die Elemente der Referenzstrecke zur Durchführung einer Referenzmessung geführt. Entspricht das am weiteren Testdetektor 18 dadurch generierte Empfangssignal innerhalb vorgegebener Toleranzgrenzen einem vorgegebenen Sollwert, liegt eine fehlerfreie Funktion dieser Elemente der Testeinheit vor. Falls keine solche Übereinstimmung mit dem Sollwert vorliegt, arbeitet eine dieser Komponenten fehlerhaft. Dann wird in der Auswerteeinheit eine Stör- oder Warnmeldung generiert.

Durch die Drehbewegung des Tellers 5 wird die Referenzstrecke mit den weiteren Testdetektoren 18 zu allen Testsendern 13 geführt, so dass zeitlich nacheinander für alle Testsender 13 in diskreten Referenzpositionen eine derartige Referenzmessung durchgeführt wird.

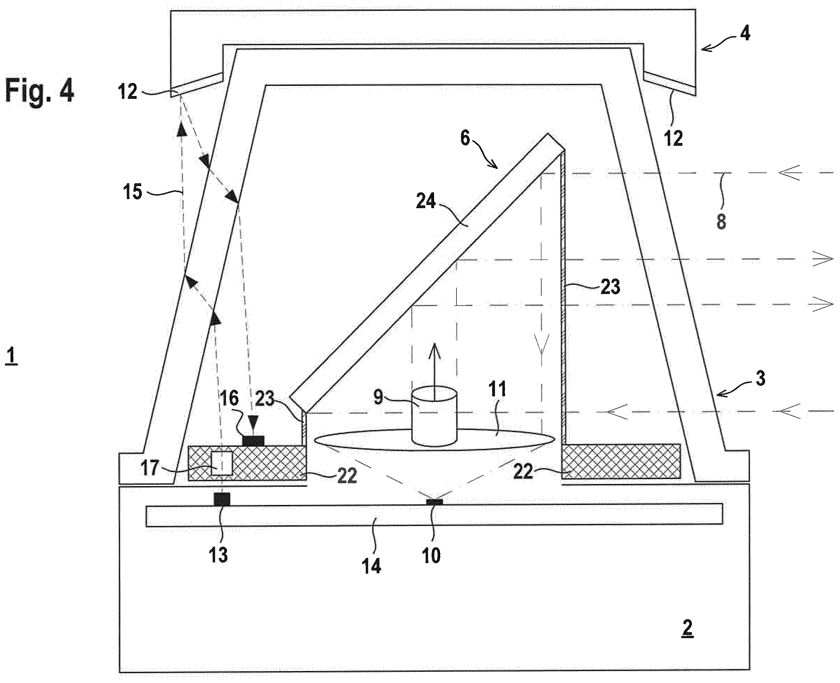

Figur 4 zeigt eine Variante des optischen Sensors 1 gemäß Figur 1. Im Unterschied zur Ausführungsform gemäß Figur 1 ist nun die Sende-/ Empfangseinheit 6 stationär im Gehäuse 3 angeordnet, wobei der Empfänger 10 auf der Platine 14 angeordnet ist und der Sender 9 mit der Empfangsoptik 11 diesem vorgeordnet ist.

Der auf dem Rotor des Elektromotors drehbar gelagerte rotierende Körper ist im vorliegenden Fall von einem Ring 22 gebildet. Auf dem Ring 22 ist mit Stegen 23 ein Umlenkspiegel 24 gelagert, der mit dem Ring 22 mitrotiert. Die vom Sender 9 emittieren Lichtstrahlen 8 werden durch die Ablenkung am Umlenkspiegel 24 periodisch innerhalb des Überwachungsbereichs geführt. Die Objektdetektion mit dieser Sender-/ Empfangseinheit 6 erfolgt in gleicher Weise wie bei der Ausführungsform gemäß Figur 4.

Auf dem Ring 22 als rotierender Körper sind die Komponenten der Testeinheit in gleicher Weise wie bei der Ausführungsform gemäß Figur 1 angeordnet. Auch die Testsender 13 sind wie bei der Ausführungsform der Figur 1 auf der Platine 14 angeordnet. Damit sind die Testeinheiten beider Ausführungsformen der Figuren 1 und 4 identisch ausgebildet.

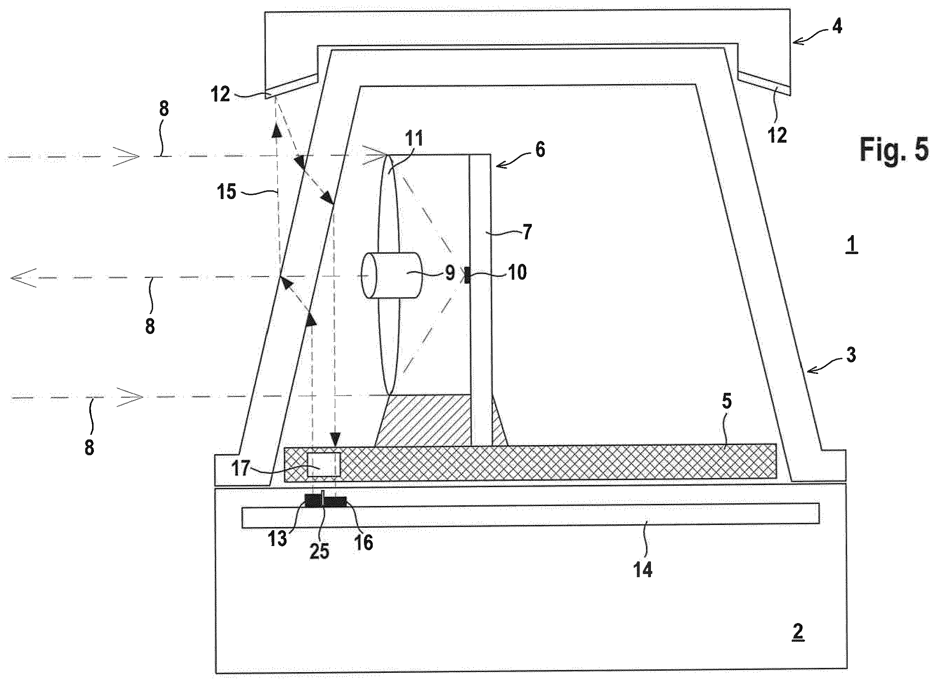

Die Figuren 5 bis 7 zeigen einen optischen Sensor 1, dessen Sende-/ Empfangseinheit 6 identisch mit der Ausführungsform gemäß Figur 1 ist. Prinzipiell könnte der optische Sensor 1 auch eine Sende-/ Empfangseinheit 6 gemäß der Ausführungsform von Figur 4 aufweisen.

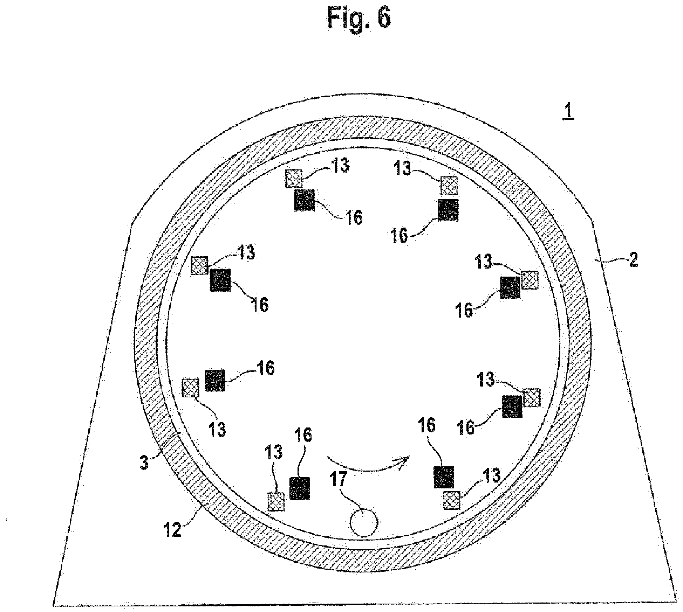

Bei der Ausführungsform gemäß den Figuren 5 bis 7 weist die Testeinheit mehrere, im vorliegenden Fall acht identische Paare von Testsendern 13 und Testdetektoren 16 auf. Der Testsender 13 und der Testdetektor 16 eines Paares liegen dicht nebeneinander auf der Platine 14 und sind durch eine Kanaltrennung 25 optisch getrennt. Die Paare von Testsendern 13 und Testdetektoren 16 sind daher alle stationär im Gehäuse 3 angeordnet und jeweils um identische Winkelschritte versetzt zueinander angeordnet (Figur 6).

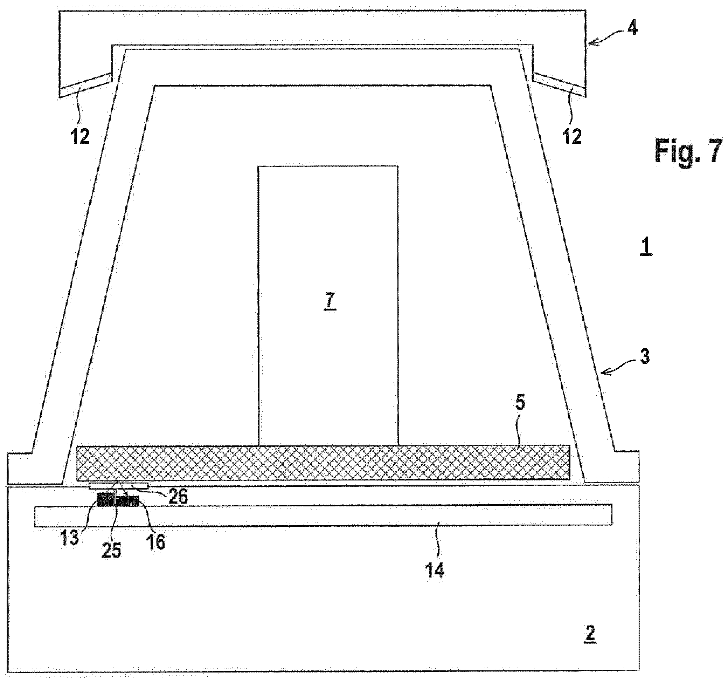

Auf dem Teller 5 befindet sich im Gegensatz zu der Ausführungsform gemäß Figur 1 kein Testdetektor 18. Vielmehr ist lediglich an einer Stelle des Tellers 5 eine Durchgangsbohrung 17 vorgesehen. Um einen bestimmten Winkel versetzt hierzu befindet sich lokal eine Referenzfläche 26 mit einer bestimmten, vorgegebenen Reflektivität (Figur 7). Die Ausdehnung der Referenzfläche 26 ist etwas größer als die von einem Paar eines Testsenders 13 und Testdetektors 16 beanspruchte Fläche.

Befindet sich die Durchgangsbohrung 17 vor einem Paar eines Testsenders 13 und Testdetektors 16 (wie Figur 5 zeigt) wird mit diesem Paar eine Testmessung zur Prüfung der Lichtdurchlässigkeit der Scheibe durchgeführt. Die vom Testsender 13 emittierten Testlichtstrahlen 15 durchsetzen die Durchgangsbohrung 17 und werden durch die Scheibe zum Reflektor 12 geführt. Die zum Reflektor 12 reflektierten Testlichtstrahlen 15 durchdringen dann nochmals die Scheibe und werden zum Testdetektor 16 dieses Paares geführt. Durch eine Amplitudenbewertung, insbesondere Schwellwertbewertung der Empfangssignale dieses Testdetektors 16 wird dann festgestellt, ob eine Beeinträchtigung der Lichtdurchlässigkeit der Scheibe vorliegt. Durch die Drehbewegung des Tellers 5 wird die Durchgangsbohrung 17 nacheinander zu allen Paaren von Testsendern 13 und Testdetektoren 16 geführt, so dass mit diesem einzeln nacheinander Testmessungen durchgeführt werden.

Wenn, wie Figur 7 zeigt, die Referenzfläche 26 oberhalb eines Paares eines Testsender 13 und Testdetektors 16 liegt, so wird mit diesem Testsender 13 und Testdetektor 16 eine Referenzmessung zur Funktionsüberprüfung dieser Komponenten der Testeinheit durchgeführt. Eine fehlerfreie Funktion dieser Komponenten liegt dann vor, wenn bei der Führung der Testlichtstrahlen 15 über die Referenzfläche 26 zum Testdetektor 16 ein Empfangssignal erhalten wird, das innerhalb von Toleranzgrenzen einem vorgegebenen Sollwert entspricht.

### Bezugszeichenliste

- (1): Optischer Sensor
- (2): Sockel
- (3): Gehäuse
- (4): Kappe
- (5): Teller
- (6): Sende/- Empfangseinheit
- (7): Halterung
- (8): Lichtstrahlen
- (9): Sender
- (10): Empfänger
- (11): Empfangsoptik
- (12): Reflektor
- (13): Testsender
- (14): Platine
- (15): Testlichtstrahlen
- (16): erster Testdetektor
- (17): Durchgangsbohrung
- (18): zweiter Testdetektor
- (19): Lichtleiter
- (20): Bohrung
- (21): Reflektorelement
- (22): Ring
- (23): Stege
- (24): Umlenkspiegel
- (25): Kanaltrennung
- (26): Referenzfläche

## Patentansprüche

1. Optischer Sensor (1) zur Erfassung von Objekten in einem Überwachungsbereich mit einem Gehäuse (3) und einer innerhalb des Gehäuses (3) angeordneten Sende-/ Empfangseinheit (6), wobei von einem Sender (9) der Sende-/ Empfangseinheit (6) emittierte Lichtstrahlen (8) periodisch innerhalb des Überwachungsbereichs geführt sind und dabei eine Scheibe durchsetzen, wobei von einem Objekt zurückreflektierte Lichtstrahlen (8) durch die Scheibe zu einem Empfänger (10) der Sende-/ Empfangseinheit (6) geführt sind und in einer Auswerteeinheit Empfangssignale des Empfängers (10) zur Generierung eines Objektfeststellungsignals ausgewertet werden, und wobei eine Testeinheit zur Überprüfung der Durchlässigkeit der Scheibe vorgesehen ist, **dadurch gekennzeichnet, dass** die Testeinheit mehrere stationär im Gehäuse (3) angeordnete Testsender (13) aufweist, deren Testlichtstrahlen (15) auf unterschiedliche Bereiche der Scheibe ausgerichtet sind, dass die Testeinheit eine außerhalb des Gehäuses (3) angeordnete Reflektoreinheit aufweist, auf welche die Testlichtstrahlen (15) der Testsender (13) ausgerichtet sind und dass jedem Testsender (13) in einer Detektionsposition ein Testdetektor (16) als weiterer Bestandteil der Testeinheit so zugeordnet ist, dass die von diesem Testsender (13) emittierten Testlichtstrahlen (15) die Scheibe durchsetzen, auf die Reflektoreinheit treffen und von dort durch die Scheibe zum Testdetektor (16) geführt sind, und dass mit dem Testdetektor (16) oder einem weiteren Testdetektor (18) eine Referenzmessung durchgeführt wird, wobei hierzu die von einem Testsender (13) emittierten Testlichtstrahlen (15) über eine Referenzstrecke zu diesem Testdetektor (16, 18) geführt sind, und dass der optische Sensor (1) einen dem Testsender (13) zugeordneten, um eine Drehachse rotierenden Körper aufweist, welcher Führungsmittel zur Vorgabe der Detektionsposition aufweist, wobei der rotierende Körper eine das Führungsmittel bildende Durchgangsbohrung (17) aufweist, wobei in die Detektionsposition definierenden Drehstellungen des rotierenden Körpers die von einem Testsender (13) emittierten Testlichtstrahlen (15) die Durchgangsbohrung (17) durchsetzen und über die Reflektoreinheit zum Testdetektor (16, 18) geführt sind.

2. Optischer Sensor nach Anspruch 1, **dadurch gekennzeichnet, dass** die Reflektoreinheit ein in Umfangsrichtung des Gehäuses (3) verlaufender sich über den Bereich der Scheibe erstreckender Reflektor (12) ist.

3. Optischer Sensor nach einem der Ansprüche 1 oder 2, **dadurch gekennzeichnet, dass** die Auswerteeinheit ausgebildet ist, die mit den in den Detektionsposition angeordneten Testdetektoren (16) generierten Empfangssignale als Maß für die Durchlässigkeit der Scheibe auszuwerten.

4. Optischer Sensor nach einem der Ansprüche 1 bis 3, **dadurch gekennzeichnet, dass** die Auswerteeinheit ausgebildet ist, anhand der bei Referenzmessungen mit dem Testdetektor (16) oder dem weiteren Testdetektor (18) generierten Empfangssignale eine Funktionsüberprüfung von Komponenten der Testeinheit durchzuführen.

5. Optischer Sensor nach Anspruch 4, **dadurch gekennzeichnet, dass** bei den Referenzmessungen eine Funktionsüberprüfung der Testsender (13) und deren Testlichtstrahlen (15) durchgeführt ist.

6. Optischer Sensor nach einem der Ansprüche 1 bis 5, **dadurch gekennzeichnet, dass** jedem Testsender (13) ein stationär angeordneter Testdetektor (18) benachbart zugeordnet ist.

7. Optischer Sensor nach Anspruch 6, **dadurch gekennzeichnet, dass** in einer eine Detektionsposition definierenden Drehstellung des rotierenden Körpers ein Testsender (13) und dessen zugeordneter Testdetektor (18) der Durchgangsbohrung (17) zugeordnet sind.

8. Optischer Sensor nach einem der Ansprüche 6 oder 7, **dadurch gekennzeichnet, dass** an eine Stirnseite des rotierenden Körpers eine Referenzfläche (26) vorgesehen ist, wobei in diskreten Drehstellungen des rotierenden Körpers die von einem Testsender (13) emittierten Testlichtstrahlen (15) zur Durchführung einer Referenzmessung über die Referenzfläche (26) zum Testdetektor (16, 18) geführt sind.

9. Optischer Sensor nach einem der Ansprüche 1 bis 8, **dadurch gekennzeichnet, dass** auf dem rotierenden Körper ein Testdetektor (16) angeordnet ist, wobei in den die Detektionsposition definierenden Drehstellungen des rotierenden Körpers die von einem Testsender (13) emittierten Testlichtstrahlen (15) über das Führungsmittel und die Reflektoreinheit zum Testdetektor (16) geführt sind.

10. Optischer Sensor nach Anspruch 9, **dadurch gekennzeichnet, dass** durch die Drehbewegung des rotierenden Körpers der Testdetektor (16) nacheinander in Drehpositionen den einzelnen Testsendern (13) zugeordnet ist.

11. Optischer Sensor nach einem der Ansprüche 9 oder 10, **dadurch gekennzeichnet, dass** auf dem rotierenden Körper ein weiterer Testdetektor (18) angeordnet ist, mittels dessen Referenzmessungen durchführbar sind.

12. Optischer Sensor nach Anspruch 11, **dadurch gekennzeichnet, dass** der Testdetektor (16) und der weitere Testdetektor (18) versetzt zueinander auf dem rotierenden Körper angeordnet sind.

13. Optischer Sensor nach einem der Ansprüche 11 oder 12, **dadurch gekennzeichnet, dass** in diskreten Referenzpositionen der weitere Testdetektor (18) jeweils einem Testsender (13) so zugeordnet ist, dass die von diesem Testsender (13) emittierten Testlichtstrahlen (15) über die Referenzstrecke zum weiteren Testdetektor (18) geführt sind.

14. Optischer Sensor nach Anspruch 13, **dadurch gekennzeichnet, dass** die Referenzstrecke von einem Lichtleiter (19) am rotierenden Körper, einer Bohrung (20) in dem rotierenden Körper und einem Reflektorelement (21) am rotierenden Körper gebildet ist.

15. Optischer Sensor nach einem der Ansprüche 1 bis 14, **dadurch gekennzeichnet, dass** dieser ein Distanzsensor ist.

16. Optischer Sensor nach einem der Ansprüche 1 bis 15, **dadurch gekennzeichnet, dass** die Sende-/ Empfangseinheit (6) um eine Drehachse rotierend angeordnet ist.

17. Optischer Sensor nach einem der Ansprüche 1 bis 16, **dadurch gekennzeichnet, dass** die Sende-/ Empfangseinheit (6) stationär im Gehäuse (3) angeordnet ist, und dass die Lichtstrahlen (8) über eine um eine Drehachse rotierende Ablenkeinheit geführt sind.

## Claims

1. An optical sensor (1) for detecting objects in a monitoring region, having a housing (3) and a transmitting/receiving unit (6) arranged inside the housing (3), wherein light beams (8) emitted by a transmitter (9) of the transmitting/receiving unit (6) are guided periodically inside the monitoring region and pass through a disc in the process, wherein light beams (8) reflected back from an object are guided through the disc to a receiver (10) of the transmitting/receiving unit (6) and received signals of the receiver (10) are evaluated in an evaluation unit for generating an object detection signal, and wherein a test unit is provided for checking the permeability of the disc, **characterised in that** the test unit has a plurality of test transmitters (13) which are arranged stationarily in the housing (3) and whose test light beams (15) are aligned with different regions of the disc, **in that** the test unit has a reflector unit which is arranged outside the housing (3), on which the test light beams (15) of the test transmitters (13) are aligned and **in that** a test detector (16) is assigned to each test transmitter (13) in a detection position as a further component of the test unit, **in that** the test light beams (15) emitted by this test transmitter (13) pass through the disc, hit the reflector unit and are guided from there through the disc to the test detector (16) and **in that** a reference measurement is carried out with the test detector (16) or a further test detector (18), wherein the test light beams (15) emitted by a test transmitter (13) for this purpose are transmitted via a reference path to this test detector (16, 18), and **in that** the optical sensor (1) has a body which is assigned to the test transmitter (13) and rotates about an axis of rotation and which has guide means for presetting the detection position, wherein the rotating body has a throughbore (17) which forms the guide means, wherein the test light beams (15) emitted by a test transmitter (13) pass through the throughbore (17) into the rotational positions of the rotating body which define the detection position, and are guided via the reflector unit to the test detector (16, 18).

2. The optical sensor according to claim 1, **characterised in that** the reflector unit is a reflector (12) extending in the circumferential direction of the housing (3) over the region of the disc.

3. The optical sensor according to one of claims 1 or 2, **characterised in that** the evaluation unit is designed to evaluate the received signals generated with the test detectors (16) arranged in the detection position as a measure of the permeability of the disc.

4. The optical sensor according to one of claims 1 to 3, **characterised in that** the evaluation unit is designed to carry out a functional check of components of the test unit on the basis of the received signals generated during reference measurements with the test detector (16) or the further test detector (18).

5. The optical sensor according to Claim 4, **characterised in that** a functional check of the test transmitters (13) and their test light beams (15) is carried out during the reference measurements.

6. The optical sensor according to one of claims 1 to 5, **characterised in that** a stationary test detector (18) is assigned adjacent to each test transmitter (13).

7. The optical sensor according to claim 6, **characterised in that**, in a rotational position of the rotating body defining a detection position, a test transmitter (13) and its associated test detector (18) are assigned to the through-hole (17).

8. The optical sensor according to one of claims 6 or 7, **characterised in that** a reference surface (26) is provided on an end face of the rotating body, the test light beams (15) emitted by a test transmitter (13) being guided via the reference surface (26) to the test detector (16, 18) in discrete rotational positions of the rotating body in order to carry out a reference measurement.

9. The optical sensor according to one of claims 1 to 8, **characterised in that** a test detector (16) is arranged on the rotating body, the test light beams (15) emitted by a test transmitter (13) being guided via the guide means and the reflector unit to the test detector (16) in the rotational positions of the rotating body defining the detection position.

10. The optical sensor according to claim 9, **characterized in that** the test detector (16) is associated successively with the individual test transmitters (13) in rotational positions by the rotational movement of the rotating body.

11. The optical sensor according to one of the claims 9 or 10, **characterised in that** a further test detector (18) is arranged on the rotating body, by means of which reference measurements can be carried out.

12. The optical sensor according to Claim 11, **characterised in that** the test detector (16) and the further test detector (18) are arranged offset relative to one another on the rotating body.

13. The optical sensor according to one of claims 11 or 12, **characterised in that**, in discrete reference positions, the further test detector (18) is assigned in each case to a test transmitter (13) in such a way that the test light beams (15) emitted by this test transmitter (13) are guided over the reference path to the additional test detector (18).

14. The optical sensor according to claim 13, **characterised in that** the reference path is formed by a light guide (19) on the rotating body, a bore (20) in the rotating body and a reflector element (21) on the rotating body.

15. The optical sensor according to any of claims 1 to 14, **characterised in that** it is a distance sensor.

16. The optical sensor according to one of claims 1 to 15, **characterised in that** the transmitting/receiving unit (6) is arranged so as to rotate about an axis of rotation.

17. The optical sensor according to one of claims 1 to 16, **characterised in that** the transmitting/receiving unit (6) is arranged stationarily in the housing (3), and **in that** the light beams (8) are guided via a deflection unit rotating about an axis of rotation.

## Revendications

1. Capteur optique (1) pour détecter des objets dans une zone de surveillance, comprenant un boîtier (3) et une unité d'émission/réception(6) disposée à l'intérieur du boîtier (3), dans lequel des faisceaux lumineux (8) émis par un émetteur (9) de l'unité d'émission/réception (6) sont guidés périodiquement à l'intérieur de la zone de surveillance et passent à travers un disque lors du processus, dans lequel des faisceaux lumineux (8) réfléchis en retour par un objet sont guidés à travers le disque vers un récepteur (10) de l'unité d'émission/réception (6) et les signaux reçus du récepteur (10) sont évalués dans une unité d'évaluation pour générer un signal de détection d'objet, et dans lequel une unité de test est prévue pour vérifier la perméabilité du disque, **caractérisé en ce que** l'unité de test comporte une pluralité d'émetteurs de test (13) qui sont disposés de manière stationnaire dans le boîtier (3) et dont les faisceaux de lumière de test (15) sont alignés avec différentes zones du disque, **en ce que** l'unité de test comporte un réflecteur disposé à l'extérieur du boîtier (3), sur lequel sont alignés les faisceaux de lumière de test (15) des émetteurs de test (13) et **en ce qu'**un détecteur de test (16) est associé à chaque émetteur de test (13) dans une position de détection en tant que composant supplémentaire de l'unité de test, **en ce que** les faisceaux de lumière de test (15) émis par cet émetteur de test (13) traversent le disque, frappent l'unité réflecteur et sont guidés de là par le disque vers le détecteur de test (16) et **en ce qu'**une mesure de référence est effectuée avec le détecteur de test (16) ou un autre détecteur de test (18), dans lequel les faisceaux de lumière de test (15) émis à cet effet par un émetteur de test (13) sont transmis à ce détecteur de test (16, 18) via un trajet de référence, et **en ce que** le capteur optique (1) présente un corps qui est associé à l'émetteur de test (13), qui tourne autour d'un axe de rotation et qui présente des moyens de guidage pour prérégler la position de détection, dans lequel le corps rotatif a un alésage traversant (17) qui forme les moyens de guidage, dans lequel les faisceaux de lumière de test (15) émis par un émetteur de test (13) passent à travers l'alésage traversant (17) dans les positions de rotation du corps rotatif qui définissent la position de détection, et sont guidés via l'unité de réflecteur vers le détecteur de test (16, 18).

2. Capteur optique selon la revendication 1, **caractérisé en ce que** l'unité réflecteur est un réflecteur (12) s'étendant dans la direction circonférentielle du boîtier (3) sur la zone du disque.

3. Capteur optique selon l'une des revendications 1 ou 2, **caractérisé en ce que** l'unité d'exploitation est conçue pour évaluer les signaux reçus générés par les détecteurs de test (16) disposés dans la position de détection comme mesure de la perméabilité du disque.

4. Capteur optique selon l'une des revendications 1 à 3, **caractérisé en ce que** l'unité d'évaluation est conçue pour effectuer un contrôle fonctionnel de composants de l'unité de test sur la base des signaux reçus générés lors de mesures de référence avec le détecteur de test (16) ou le détecteur de test (18) supplémentaire.

5. Capteur optique selon la revendication 4, **caractérisé en ce qu'**un contrôle fonctionnel des émetteurs de test (13) et de leurs faisceaux lumineux de test (15) est effectué pendant les mesures de référence.

6. Capteur optique selon l'une des revendications 1 à 5, **caractérisé en ce qu'**un détecteur de test stationnaire (18) est associé de manière adjacente à chaque émetteur de test (13).

7. Capteur optique selon la revendication 6, **caractérisé en ce que**, dans une position de rotation du corps rotatif définissant une position de détection, un émetteur de test (13) et son détecteur de test (18) associé sont affectés à l'alésage traversant (17).

8. Capteur optique selon l'une des revendications 6 ou 7, **caractérisé en ce qu'**une surface de référence (26) est prévue sur une face frontale du corps rotatif, les faisceaux de lumière de test (15) émis par un émetteur de test (13) étant guidés par la surface de référence (26) vers le détecteur de test (16, 18) dans des positions de rotation distinctes du corps rotatif afin de réaliser une mesure de référence.

9. Capteur optique selon l'une des revendications 1 à 8, **caractérisé en ce qu'**un détecteur de test (16) est disposé sur le corps rotatif, les faisceaux de lumière de test (15) émis par un émetteur de test (13) étant guidés par les moyens de guidage et l'unité réflecteur vers le détecteur de test (16) dans les positions de rotation du corps rotatif définissant la position de détection.

10. Capteur optique selon la revendication 9, **caractérisé en ce que** le détecteur de test (16) est associé successivement aux différents émetteurs de test (13) dans des positions de rotation par le mouvement rotatif du corps rotatif.

11. Capteur optique selon l'une des revendications 9 ou 10, **caractérisé en ce qu'**un autre détecteur de test (18) est disposé sur le corps rotatif, au moyen duquel des mesures de référence peuvent être effectuées.

12. Capteur optique selon la revendication 11, **caractérisé en ce que** le détecteur de test (16) et l'autre détecteur de test (18) sont disposés décalés l'un par rapport à l'autre sur le corps rotatif.

13. Capteur optique selon l'une des revendications 11 ou 12, **caractérisé en ce que**, dans des positions de référence discrètes, l'autre détecteur de test (18) est affecté à chaque fois à un émetteur de test (13) de telle sorte que les faisceaux lumineux de test (15) émis par cet émetteur de test (13) sont guidés sur le trajet de référence vers le détecteur de test (18) supplémentaire.

14. Capteur optique selon la revendication 13, **caractérisé en ce que** le trajet de référence est formé par un guide de lumière (19) sur le corps rotatif, un alésage (20) dans le corps rotatif et un élément réflecteur (21) sur le corps rotatif.

15. Capteur optique selon l'une quelconque des revendications 1 à 14, **caractérisé en ce qu'**il s'agit d'un capteur de distance.

16. Capteur optique selon l'une des revendications 1 à 15, **caractérisé en ce que** l'unité d'émission/réception (6) est disposée de manière à tourner autour d'un axe de rotation.

17. Capteur optique selon l'une des revendications 1 à 16, **caractérisé en ce que** l'unité d'émission/réception (6) est disposée de manière stationnaire dans le boîtier (3) et **en ce que** les faisceaux lumineux (8) sont guidés par une unité de déviation tournant autour d'un axe de rotation.
